# EUROPEAN PATENT SPECIFICATION

(11) **EP 3 064 332 B1**
(45) Date of publication and mention of the grant of the patent: **11.07.2018**
(21) Application number: 15157576.8
(22) Date of filing: 04.03.2015
(51) Int. Cl.: B29C 33/04, B29C 33/50, B29C 35/16, B29C 70/48, B29D 99/00, B29L 31/08

(54) **Moulding system**
Formsystem
Système de moulage

(43) Date of publication of application: 07.09.2016
(73) Proprietor: Siemens Aktiengesellschaft, 80333 München (DE)
(72) Inventor: Grove-Nielsen, Erik, 7870 Roslev (DK)

(56) References cited:
- EP-A1- 1 946 915
- EP-A1- 2 324 994
- WO-A1-2014/114955
- WO-A2-2010/129496
- CN-U- 203 831 667
- GB-A- 1 040 685
- JP-A- 2003 071 845
- JP-A- 2008 055 709
- JP-A- 2008 246 784
- JP-A- 2013 154 624
- JP-A- 2013 199 010
- US-A- 3 448 489
- US-A- 4 338 068
- US-A- 4 940 563
- US-A- 5 885 504
- US-A- 6 112 804
- US-A1- 2004 231 822
- US-A1- 2011 165 285
- US-A1- 2013 060 529

## Description

### Field of invention

The present invention relates to a moulding system for manufacturing a rotor blade of a wind turbine.

### Art Background

It may be conventionally known that wind turbine blades are mostly fabricated using fibre-reinforced composite materials such as glass fibre reinforced epoxy plastic or carbon fibre reinforced epoxy plastic. Some rotor blades of a wind turbine may also be produced in using a vacuum-assisted resin transfer moulding technique, also named VARTM. Thereby, a number of fibre fabrics, such as glass fibre fabrics, are placed as a stack in a mould. The mould is closed and evacuated to a low pressure using a vacuum pump. Thereafter, a liquid resin is infused into the laminate stack in the mould cavity and is left to cure, i.e. to cross-link. After curing, the wind turbine blade can be taken out of the mould and can then be finished.

Nowadays, wind turbine blades have a larger and larger size. A wind turbine blade may for example have a longitudinal length of between 30 and 60 m. Thereby, demands regarding strength and rigidity may be increased.

In a conventional system, it may have been accepted that the material loses strength due to extreme reaction heat from the curing process. In conventional systems, the laminate thickness may have been increased to reduce the stress imposed on the blades. Some other conventional production methods may allow for a prolonged curing time at lower temperatures, to reach better material properties. However, the prolonged production time may be costly and may generate a higher cost of the rotor blade.

US5885504 discloses a moulding system for manufacturing turbine fan blades comprising plurality of cooling and heating elements arranged within the mould body at intervals along the length of the mould cavity, whereby ducts carrying cooling fluid are running perpendicular to the longitudinal direction of the blade. It has been observed that conventional methods and equipment for manufacturing a rotor blade have several disadvantages. The thereby manufactured conventional wind turbine blades exhibit imperfections and cracks, which may lead to decomposition and severe failures of the wind turbine blades. Thus, there may be a need for equipment and for a method for manufacturing a wind turbine blade which leads to improved wind turbine blades, in particular having fewer imperfections and cracks.

### Summary of the Invention

The need is satisfied by the subject-matter of the independent claim 1, directed to a moulding system for manufacturing a rotor blade of a wind turbine. Furthermore, using the moulding system, a method for manufacturing a rotor blade can be performed. Advantageous embodiments of the present invention are described by the dependent claims. The present invention is defined in claim 1. The moulding system may be used in a method for manufacturing a rotor blade. Thereby, the moulding system is suitable for the usage of a fibre plastic composite material, such as a resin and some fibres, such as carbon fibres or glass fibres or the like. The at least one outer mould may comprise in particular two outer moulds, such as an upper outer mould and a lower outer mould. The upper outer mould may for example have an upper moulding surface complementary to an intended windward side surface of the rotor blade. The lower outer mould may for example have a lower moulding surface complementary to an intended leeward side surface of the rotor blade. The windward side surface of the rotor blade may be, during operation of the rotor blade, directed towards the wind, while the leeward side surface of the rotor blade may be directed away from the wind. Thus, the moulding system may in particular comprise two outer moulds which may be assembled together to enclose an inner cavity within which the rotor blade is formed during a manufacturing process using fibre reinforced composite materials such as glass fibre reinforced epoxy plastic or carbon fibre reinforced epoxy plastic. The two outer moulds may be assembled together such that resin is sealed from leaving the inner cavity.

The outer heat redistribution system may take different configurations. However, it is always formed within the outer mould body. The spar cap area of the blade to be manufactured may be located, running approximately in the longitudinal direction of the mould, rotor blade, respectively, approximately at the center of the leeward side surface and the windward side surface of the rotor blade. During operation of the rotor blade in a wind turbine, the spar cap area of the wind turbine may be subjected to the highest stress due to wind impact or suction forces at the windward side surface and the leeward side surface, respectively. The spar cap areas at the windward side surface and the leeward side surface may internally of the rotor blade connected using a web laminate or some other support structure, such that a reinforcement structure similar to an H-beam is formed by the spar cap area at the windward side surface of the blade, the spar cap area at the leeward side surface of the blade and the connecting web laminate or other support structure being present within the rotor blade.

The outer heat redistribution system is adapted to redistribute heat generated during manufacturing the rotor blade, in particular in the spar cap area, to other areas of the rotor blade to be manufactured which are located closer to the leading edge and/or trailing edge of the rotor blade. The leading edge of the rotor blade is at the side of the rotor blade along which the rotor blade rotates around a rotor shaft of the wind turbine.

The inventor found that in particular in the spar cap area of the rotor blade, an extensive heat is generated during a curing reaction or cross-linking reaction of a composite material. This excessive heat may have negative effects on the quality of the finished rotor blade. The inventor found and considered that, when the thermosetting resin, such as epoxy, polyester or polyurethane is cured, a strongly exothermic reaction known as polymerization takes place. Thereby, monomer molecules are cross-linked. Especially for bigger blades with a thick laminate stack, the reaction heat can yield a substantial temperature rise which may typically impair the matrix material such as epoxy. In conventional moulding systems with closed moulds and internal mandrels, it may have been difficult to remove the access heat. Embodiments of the present invention, which is defined in claim 1, are directed to effectively remove the excess heat from the spar cap areas and transfer at least a portion of the heat to other portions of the wind turbine blade to be manufactured which may, in a conventional process, have only a relatively low temperature. The redistribution of the heat from the too hot areas to the too cold areas may improve the homogeneity of the cross-linking reaction, cross-linking time and may further reduce excessive stress due to different shrinkage in different areas of the rotor blade.

Thereby, the inventor considered the following mechanisms: As the resin is cured at higher temperature, the chemical shrinkage in the liquid phase may be reduced and the shrinkage of the solid or gel phase may be increased. The shrinkage in the solid phase may lead to residual stress between the embedded fibres and the matrix material. Thus, after final curing the residual stress may be seen as compressive stress in fibres and tensile stress in the plastic material, when conventional equipment for manufacturing a rotor blade is utilized. Embodiments of the present invention try to reduce or even avoid inhomogeneous shrinkage and residual stress between the embedded fibres and the matrix material.

When the rotor blade is cured at higher temperatures, the mismatch between the coefficient of thermal expansion (CTE) of the glass (5 x 10⁻⁶/°K) and the coefficient of thermal expansion of the epoxy (50 x 10⁻⁶/°K) may also impose an additional compressive stress on the fibres and likewise an additional tensile stress on the cured epoxy matrix, when the temperature is lowered to room temperature.

When the temperature through curing time is rising, the relatively high CTE of the gelling matrix material compared to the ten times lower CTE of glass fibre may - via the CTE mismatch - induce strong tensile stress in the matrix material. For the gelling matrix, this may often lead to crack initialization in the partially cured matrix material with gelly-like structures. This may, in a conventional manufacturing method and equipment, lead to drastically reduced fatigue properties of the produced rotor blades. Embodiments of the present invention are directed to keep the temperature through the curing reaction relatively stable, thereby reducing crack initialization.

The inventor found, that the deteriorating properties of conventional manufacturing methods may be reduced or even avoided, when an outer heat redistribution system and potentially also an inner heat redistribution system is provided in a mould system, to thereby reduce exothermic peak temperature in particular in the spar cap areas and furthermore to transfer some of the heat to regions of the rotor blade which, in conventional systems, have a relatively low temperature. Thereby, in both the spar cap area and area spaced away from the spar cap area, the curing reaction may become more homogeneous and the temperature distribution may become more flat, i.e. the difference between temperature in different regions or areas of the rotor blade is reduced compared to conventional manufacturing methods.

The inventor in particular found that the peak temperatures occur in the spar cap area, since there a relatively high amount of resin is present which generates a considerable amount of reaction heat during the curing process. For example, the reaction heat of epoxy resin is of the order 450 J/g. For one 24 t wind turbine blade, the reaction energy may be of the order of 4500 MJ - equivalent to the energy of 110 1 diesel oil and enough to bring 13400 1 of water to the boiling point. The inventor found that high curing temperatures causing shrinkage may often lead to unwanted geometric changes of the blade surface and even ovalization of the circular blade root part. In embodiments of the present invention, the (too) high curing temperatures, in particular areas of the wind turbines, may be reduced and the temperatures in other regions may be increased, thereby reducing shrinkage with the positive effect of having less unwanted geometric changes of the rotor blade surface.

According to embodiments of the present invention, a heat redistribution system may be established at or close to an internal mould surface, in the mandrels and possibly also in part of the blade structure. Thereby, the excess reaction heat may be captured by a heat exchanger. A portion of the heat may be transferred to areas with less laminate thickness and thus less dissipated energy per m², or with less generated energy or heat per m². The levelling out of the dissipated or generated heat may help to achieve a more uniform curing throughout the blade. If some of the removed excessive calorific energy is placed in an accumulation tank, the heat energy can later, by means of a heat pump, be transferred to the blade again in a post-cure process at higher temperatures, in order to achieve a higher Tg of the blade laminate.

According to the present invention, the outer heat redistribution system comprises: an outer channel system arranged within the mould body adjacent to the moulding surface; a coolant fluid inlet for introducing coolant fluid into the outer channel system; and a coolant fluid outlet for letting out the coolant fluid having exchanged heat energy with a portion of the moulding body.

The outer heat redistribution system is arranged within the outer mould body, while an optional inner heat redistribution system may be arranged not within the outer mould body but at or in an inner mould body of an inner mould which is placed in a inside cavity of the rotor blade to be manufactured. Firstly, embodiments regarding the outer heat redistribution system are described.

The outer heat redistribution system comprising the outer channel system may be physically realized using a number of plastic pipes or tubes arranged within the outer moulding body, wherein the plastic tubes or pipes may be connected to each other allowing flow-through of a fluid through the plastic pipes or tubes. Alternatively, the pipes may be made of a metal for better heat conduction. Furthermore, also for better heat conduction, the outer mould, in particular the upper outer mould and the lower outer mould, may also comprise heat conducting material, such as aluminium powder or another metal powder or metal pieces for increasing heat conductance.

The coolant fluid inlet may in particular be located at a root side of the blade to be manufactured. The coolant fluid outlet may be arranged in particular at a tip side of the rotor blade to be manufactured. The coolant fluid may be a liquid or may be a gas. The coolant liquid may for example comprise water and/or oil or other suitable coolant liquid.

Thereby, the outer heat redistribution system may be established in an easy and effective manner.

According to the present invention, the outer channel system comprises: a first channel section running substantially in a longitudinal direction of the mould, wherein the coolant fluid inlet allows introduction of the coolant fluid into the outer channel system via the first channel section.

The first channel section runs substantially close to the spar cap area on the rotor blade. Thereby, an effective heat transfer from the spar cap area of the blade to be manufactured to the coolant fluid running within the first channel section may be improved for effectively transporting away some of the excessive heat generated in the spar cap area during cross-linking of resin. The first channel section is, according to the present invention, located adjacent to where a spar cap area of the blade is located during manufacturing the blade.

According to an embodiment of the present invention, the coolant fluid inlet is located at a longitudinal side of the mould where the root of the blade is to be formed.

At the root of the blade, the spar cap area may be thicker than at the tip side of the rotor blade. In particular, the spar cap thickness may decrease from the root end of the blade to the tip end of the blade. Thus, at the root end of the blade, the maximum amount of reaction heat may be generated during the cross-linking reaction. This maximum generated heat may be effectively carried away by the coolant fluid which is still relatively cold, i.e. having relatively low temperature, as is the case for the coolant fluid just entering the outer channel system. Thus, placing the coolant fluid inlet close to where the root of the blade is to be formed, may most effectively carry away the excess heat generated at the root area of the blade.

According to an embodiment of the present invention, the coolant fluid outlet is located at another longitudinal side of the outer mould where the tip of the blade is to be formed.

Thereby, a simple streaming configuration of the coolant fluid is achieved. The coolant fluid leaving the outer channel system may be utilized for example in a post-curing process, in particular together with utilizing a heat pump.

According to an embodiment of the present invention, the outer channel system further comprising: plural second channel sections branching off from the first channel section in two different, in particular opposite directions, toward the leading edge and trailing edge of the blade, wherein the coolant fluid is fed into the second channel sections via the first channel section.

The second channel sections may allow to effectively redistribute the heat generated at the spar cap area to other areas of the rotor blade which are characterized by a thinner laminate than at the spar cap area. Thus, these areas having thinner laminate thickness may increase its temperature due to the redistribution of the heat by the second channel sections, thereby allowing an improved curing reaction or curing velocity.

According to an embodiment of the present invention, the outer channel system further comprises: a third channel section and in particular another third channel section, the third channel section running substantially in the longitudinal direction, wherein the coolant fluid is fed into the third channel sections via the second channel section.

Thereby, a simple coolant fluid streaming arrangement may be achieved. Furthermore, the coolant fluid may leave the outer channel system via the third channel section, and the coolant fluid outlet.

According to embodiments of the present invention, the outer heat redistribution system may comprise the outer channel system, as described above and additionally further features as described below. Alternatively, the outer heat redistribution system may not need to comprise the outer channel system, but may only comprise the features as described below.

According to an embodiment of the present invention, the outer heat redistribution system comprises: plural heat conducting elongated elements, in particular comprising metal, having a portion located adjacent to where the spar cap of the blade is to be located and another portion spaced away, toward the leading or the trailing edge, from where the spar cap of the blade is to be located.

The heat conducting elongated elements may comprise metal, such as aluminium. The elongated elements may comprise sticks or bars embedded into the outer mould, in particular embedded into the upper outer mould and the lower outer mould. The heat conducting elongated elements may be heated by the heat generated at the spar cap areas and may conduct the heat away from the spar cap areas towards the leading edge or trailing edge of the rotor blade. Thereby, no flow of cooling fluid may be required, thus a passive heat redistribution system is provided. For example, for operating the outer heat redistribution system comprising the outer channel system, a pump may be required to effect a streaming of the cooling fluid through the outer channel system. In the passive outer heat redistribution system, however, comprising the heat conducting elongated elements, no additional equipment may be required. Thereby, the heat redistribution system may be provided in a very simple manner without requiring complex further equipment.

According to an embodiment of the present invention, the heat conducting elongated elements have their longitudinal direction substantially oriented perpendicular to a longitudinal direction of the mould.

Such an orientation may in an effective way allow transfer or transport of heat from the spar cap areas towards areas of the rotor blade to be manufactured where the laminate is much thinner than at the spar cap areas. Thereby, the curing reaction or curing velocity may be made more homogeneous across the rotor blade.

The moulding system may further comprise at least one inner mould (in particular two inner moulds separated by a web structure connecting spar cap areas in the leading and the leeward side surface of the blade) having an inner mould body with a deformable/flexible moulding surface to contact an inner surface portion of the rotor blade; an inner heat redistribution system within the inner mould body for redistributing heat from a root area of the blade towards a tip area of the blade.

The inner mould(s) may be a flexible structure which may be deformable for introduction and removal. The inner mould may comprise for example foam or may comprise a plastic bag. The inner mould may be placed during manufacturing of the wind turbine blade, in a space which is empty, when the rotor blade is finished. For example, the inner mould(s) is withdrawn or removed from the inside of the rotor blade after the rotor blade surfaces have cured and are solidified. The inner mould may for example withdrawn from the solidified rotor blade from the root end. Thereby, some deformation may be necessary.

The inner heat redistribution system may be present close to the spar cap area and also close to a support (web) structure connecting the spar cap area at the windward side surface of the blade with the spar cap area at the leeward side surface of the blade. Since at the root side of the rotor blade, the spar cap areas may be thicker in laminate thickness than at the tip side of the rotor blade, the inner heat redistribution system may contribute to a homogenization of the temperature during a curing process.

According to an embodiment of the present invention, the inner heat redistribution system is adapted as at least one inner channel system, each comprising: a flexible bag having inner channels to be placed adjacent to a web structure of the blade, the web structure connecting, within the blade to be manufactured, a windward side surface spar cap with a leeward side surface spar cap of the blade, wherein the inner channels are adapted to allow flow through of a cooling fluid, wherein the inner channels are running substantially in a longitudinal direction of the mould.

The inner channel system having the inner channels may be adapted to allow flow-through of a cooling gas or a cooling liquid. In particular, the cooling fluid may comprise air.

According to an embodiment of the present invention, the inner channel system further comprises at least one flow back pipe running in a longitudinal direction within the inner mould body for guiding the cooling fluid from the tip area to the root area.

The flow back pipe allows to discharge the cooling fluid from the inner heat redistribution system.

According to an embodiment of the present invention, the moulding system further comprises a pump adapted and connected for pumping the fluid such that it is introduced into and/or leaves the outer channel system and/or the inner channel system; a fluid tank for accommodating fluid which has left the outer channel system and/or the inner channel system; a heat pump adapted for increasing a temperature of the fluid obtained from the fluid tank and connected such that the fluid having increased temperature can be fed via the fluid inlet into the outer channel system and/or the inner channel system.

Other embodiments enclose a pump and a heat exchanger for cooling the cooling fluid after having streamed through the channel system of the inner or outer heat redistribution system.

When a heat pump is included in the moulding system, the cooling fluid having slightly elevated temperature after running through the channel system may be reused, after its temperature has been increased using the heat pump, in a post-curing process, in which it may be reintroduced into the (inner and/or outer) channel system to further cure the rotor blade.

According to an embodiment of the present invention, the outer heat redistribution system and/or the inner heat redistribution system is adapted to maintain a temperature of the spar cap area between 80°C and 130°C, in particular between 80°C and 100°C.

Thereby, a more homogeneous temperature distribution may be achieved across the rotor blade, wherein the temperature is closer to an optimal temperature (for example 80°C) for the curing reaction. Thereby, the quality of the rotor blade and its strength may be improved compared to conventional rotor blades. E.g. flow rate of the cooling fluid may accordingly controlled, based e.g. on temperature measurements.

The moulding system may also be used to perform a manufacturing method.

The aspects defined above and further aspects of the present disclosure are apparent from the examples of embodiment to be described hereinafter and are explained with reference to the examples of embodiment. The invention will be described in more detail hereinafter with reference to examples of embodiment but to which the invention is not limited since the invention is defined in claim 1.

### Brief Description of the Drawings

Embodiments of the present invention are now described with reference to the accompanying drawings. The invention is defined in claim 1 and is therefore not restricted to the illustrated or described embodiments.
Fig. 1 schematically shows in a cross-sectional view a rotor blade which can be manufactured using a moulding system and performing a method according to embodiments of the present invention;
Fig. 2 shows a micrograph of a surface portion of a conventionally manufactured rotor blade;
Fig. 3 illustrates a graph indicating generation of heat during a curing or cross-linking process;
Fig. 4 schematically illustrates a moulding system according to an embodiment of the present invention.
Fig. 5 schematically illustrates, in a top view, a portion of the moulding system illustrated in Fig. 4;
Fig. 6 schematically illustrates, in a cross-sectional view, aspects of a moulding system according to an embodiment of the present invention;
Fig. 7 schematically illustrates in a plan view a moulding system according to an embodiment of the present invention; and
Fig. 8 illustrates a further embodiment of a moulding system according to an embodiment of the present invention.

### Detailed Description

The illustration in the drawings is in schematic form. It is noted that in different figures, similar or identical elements are provided with the same reference signs or with reference signs, which are different from the corresponding reference signs only within the first digit.

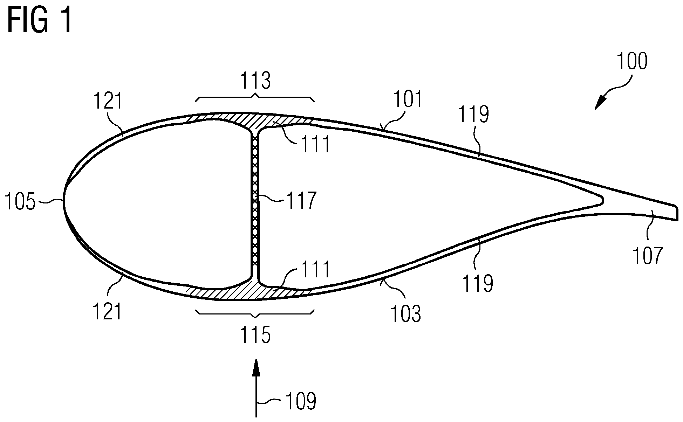

The rotor blade 100 illustrated in **Fig. 1** in a cross-sectional view (viewed along a longitudinal axis of the rotor blade 100) comprises a windward side surface 103, a leeward side surface 101, a leading edge 105 and a trailing edge 107. During operation of the wind turbine blade, wind 109 would impact onto the windward side surface 103. The rotor blade 100 is made according to a manufacturing method using a moulding system according to an embodiment of the present invention and comprises fibre reinforced plastic material 111, 119, 121 having different thicknesses along a path from the leading edge 105 to the trailing edge 107. In a so-called spar cap area 113 at the windward side surface 103 and at a spar cap area 115 of the leeward side surface 101, the thickness of the laminate 111 or reinforced plastic material may be between 5 cm and 10 cm. In contrast, a thickness of the laminate 111, 119, 121 may decrease from the spar cap areas 113, 115 towards the leading edge 105 and also towards the trailing edge 107 and may assume minimal thicknesses for example between 2 mm and 5 mm.

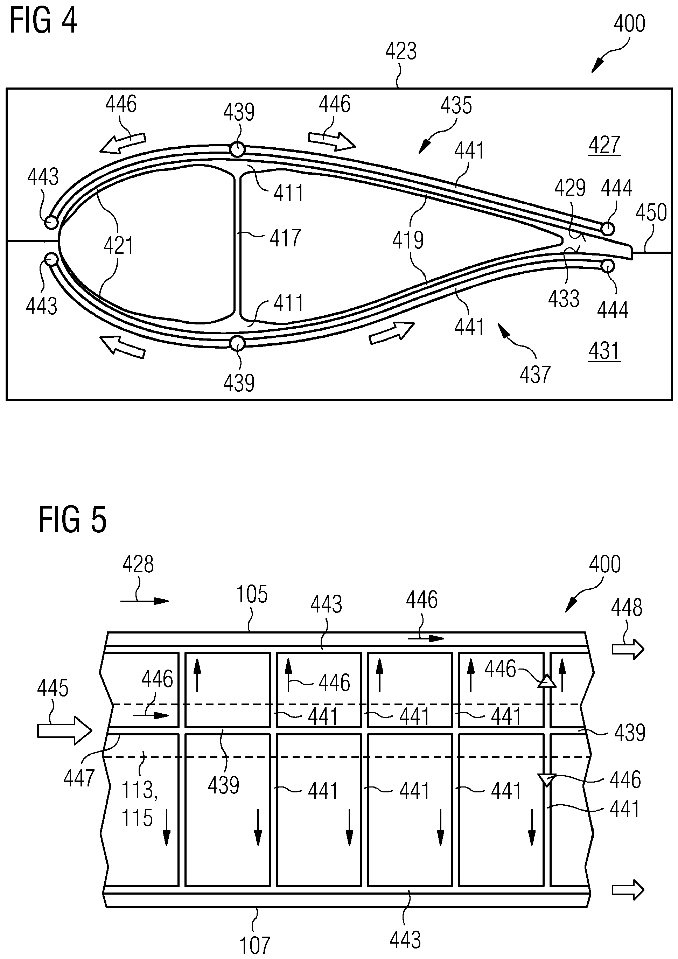

The rotor blade 100 further comprises a web structure 117 which may be a prefabricated rigid structure that connects the spar cap area 113 at the windward side surface 103 with the spar cap area 115 at the leeward side surface 101, in order to form a structure similar to an H-beam for reinforcing the rotor blade 100. The rotor blade 100 may be manufactured performing a method using a moulding system according to an embodiment of the present invention, such as those illustrated in Figs. 4, 5, 6, 7 and 8. For example, as will be explained in more detail below, in the spar cap areas 113, 115, a higher amount of heat may be generated during a curing process than for example in the aft panel 119 and the front panel 121.

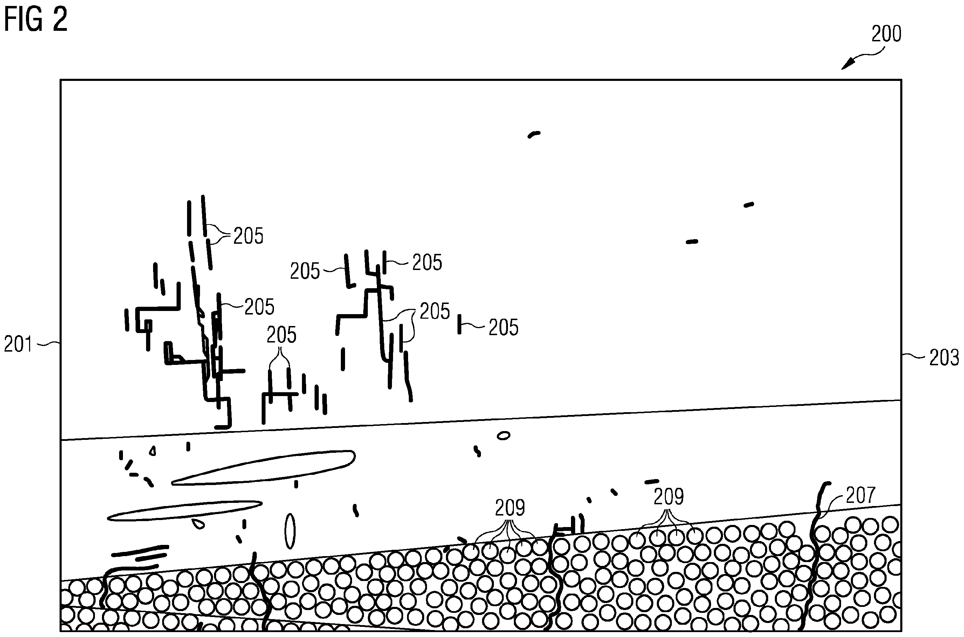

**Fig. 2** illustrates a micrograph of a conventional wind turbine manufactured using a conventional process. The root side of the blade is labelled with reference sign 201 and the tip side of the blade is labelled with reference sign 203. The micrograph 200 illustrates cracks or broken fibre portions 205. Furthermore, a matrix fracture line 207 is visible. Fibres predominantly may run in a horizontal direction in the micrograph 200 illustrated in Fig. 2, i.e. from the root side 201 to the tip side 203. Further, additional fibres may run perpendicular to the longitudinally running fibres and may be and may a stitched and/or sewed thereto to achieve a interconnection. These fibres are for example indicated with reference sign 209. The damages, cracks and fracture lines predominantly occur close to a spar cap area 113, 115 in a conventional rotor blade.

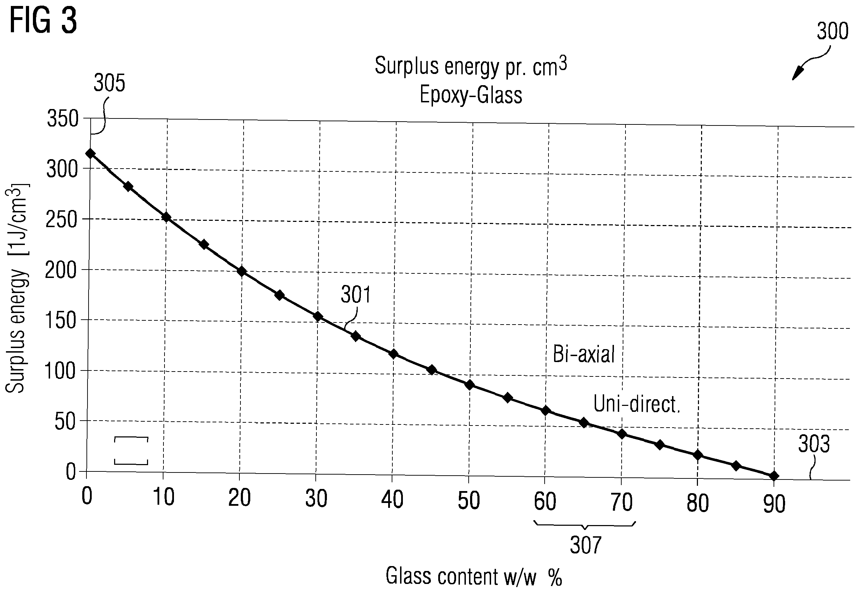

**Fig. 3** illustrates a graph 300 showing in a curve 301 the surplus energy per cm³ in dependence of a glass content in wt.-% as indicated on the abscissa 303. The surplus energy is indicated on the ordinate 305. As can be seen from the curve 301, the surplus energy per cm³ decreases with increasing glass content. According to embodiments of the present invention, the rotor blade manufactured using a moulding system according to an embodiment of the present invention may have a glass content in a range 307, in particular in a range between 60 and 70 wt.-%. The inventor found, that the damages, cracks and broken unidirectional fibres 205, 207 illustrated in Fig. 2 may be due to the excessive surplus energy generated in particular in the spar cap areas 113, 115 illustrated in Fig. 1. Embodiments of the present invention propose one or more heat transfer systems, to avoid overheating part of the laminate and at the same time to help other areas with small laminate thicknesses to cure faster, by adding heat to these areas. Furthermore, embodiments of the present invention propose one or more heat sinks capable of accumulation excess reaction heat that could be used later in the curing process via the use of a thermodynamic heat pump.

The moulding system 400 illustrated in **Fig. 4** in a cross-sectional schematic view comprises an upper outer mould 423 and a lower outer mould. The upper outer mould 423 has an upper outer mould body 427 with an upper moulding surface 4429 complementary to an intended outer surface portion of the rotor blade to be manufactured. The lower outer mould 425 comprises a lower outer mould body 431 having a lower moulding surface 433 complementary to an intended outer surface portion of the rotor blade to be manufactured. Within the outer mould bodies 427, 431, an outer heat redistribution system 435, 437 is arranged comprising an outer channel system with a first channel section 439, a second channel section 441 and a third channel section 443. Furthermore, the outer heat redistribution system 435, 437 comprises a not illustrated coolant fluid inlet and a coolant fluid outlet. The mould 423 and lower outer mould contact each other at interface 450.

A plane view of a portion of the moulding system 400 illustrated in Fig. 4 is illustrated in **Fig. 5****.** The fluid 445 is introduced via the coolant fluid inlet 447 into the first channel section 439 running substantially in a longitudinal direction 428 of the moulding system 400 and the rotor blade to be manufactured. The second channel sections 441 run substantially perpendicular to the first channel section 439. Thus, the coolant fluid 445 introduced via the first channel section 439 may carry away heat generated in the spar cap areas 113, 115 towards the trailing edge 107 or the leading edge 105 of the rotor blade by streaming through the second channel sections 441 from the spar cap area 113 towards the leading edge 105 and the trailing edge 107. The second channel sections may be configured as chordwise heat transmission pipes. The arrows 446 indicate the flow direction of the coolant fluid. The coolant fluid streams e.g. through the first channel section 439, the second channel section 441 and a third channel section 443 and leaves the channel system via the outlet 448, in particular at a tip end of the blade.

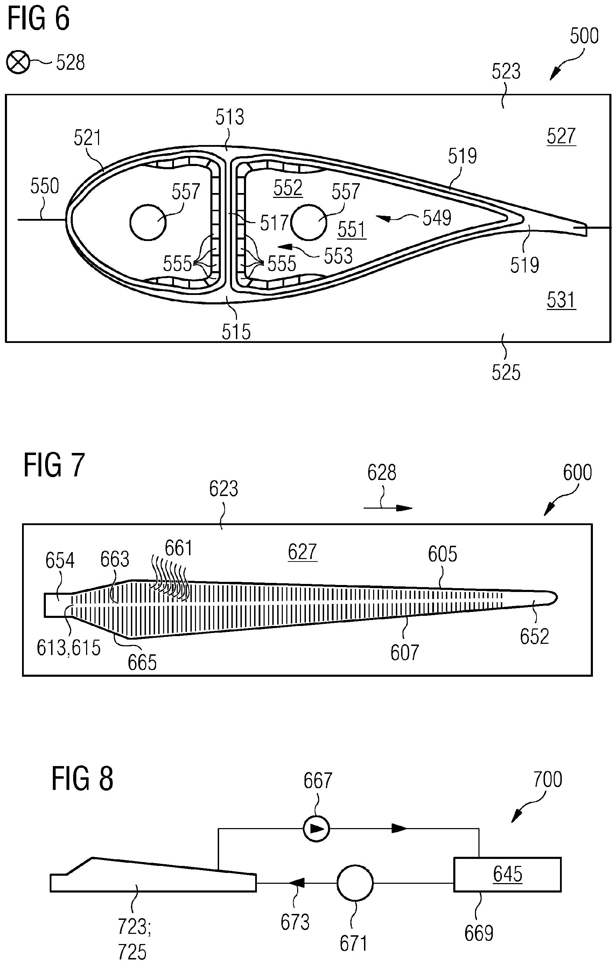

The outer heat redistribution system may further be accompanied by an inner heat redistribution system 549 such as is schematically illustrated in a cross-sectional view in **Fig. 6****.** The inner heat redistribution system 549 may be used without the outer heat redistribution system 435, 437 or in combination with the outer heat redistribution system 435, 437. Elements similar in structure and/or function in Figs. 4 and 6 are indicated with reference sign differing only in the first digit. 652 denotes tip portion and 654 root section of the mould.

The moulding system 600 illustrated in Fig. 6 comprises an upper outer mould 523 and a lower outer mould 525 which are illustrated without the outer heat redistribution system as illustrated in Figs. 4 and 5 but which may also comprise the outer heat redistribution system illustrated in Figs. 4 and 5. The inner heat redistribution system 549 is formed within an inner mould 551 and is for redistribution heat from a root area of the blade towards a tip area of the blade. Therefore, the inner heat redistribution system comprises an inner channel system 553 to be placed adjacent to a web structure 517 forming a reinforcing structure for the blade to be manufactured. The web structure 517 connects the spar cap areas 513 and 515 of the rotor blade with each other. The inner channels 555 comprised within the inner channel system 553 run substantially in the longitudinal direction 528 of the mould system 600 or 500 and the rotor blade to be manufactured. The inner channel system 553 further comprises a flow back pipe 557 running also in the longitudinal direction 528 within the inner mould body for guiding the cooling fluid from the tip area to the root area of the rotor blade.

Through the channels 555, air may be blown from the root section which is then guided within the channels 555 towards the tip end of the rotor blade and from there it may return via the flow back pipe 557 towards the root section. Thereby, a transfer of spar cap and web plate heat energy may be transferred through the channelled mandrel skin (for example formed by the channels 555) according to embodiments of the present invention. The flow channels 555 may be arranged within a mandrel skin or in a second vacuum bag.

**Fig. 7** illustrates in a top view a moulding system 600 according to an embodiment of the present invention. The moulding system 600 is one embodiment of an outer heat redistribution system and may also be combined with an inner heat redistribution system or other features of an outer heat redistribution system, such as features illustrated and described with reference to the Fig. 4 and 5.

The moulding system 600 comprises an outer mould 623 having an outer mould body 627. Within the outer mould body 627, plural heat conducting elongated elements 661 are arranged. The heat conducting elongated elements 661 have a portion 663 adjacent to a spar cap area 613, 615 and another portion 665 spaced away, towards the leading edge 607 of the rotor blade. The longitudinal direction of the heat conducting elongated elements 661 is substantially oriented perpendicular to a longitudinal direction 628.

The blade mould may also be considered to comprise transverse stringer heat transmission capability. The heat conducting elongated elements 661 may for example be configured as metal stringers for removing or moving heat energy from the spar cap area to areas with low exothermal energy release.

**Fig. 8** schematically illustrates a moulding system 700 according to an embodiment of the present invention in a schematic manner. The moulding system comprises a mould 723, 725, such as outer moulds 423, 523, 525, 623 as illustrated in Figs. 4, 5, 6 and 7. Further, the moulding system 700 illustrated in Fig. 8 comprises a pump 667 which is adapted and connected for pumping the fluid such that it is introduced into and/or leaves the outer channel system and/or the inner channel system as described above with reference to the Figs. 4, 5, 6 which are not explicitly illustrated in Fig. 8. The system 700 further comprises a fluid tank 669 for accommodating fluid 645 which has left the outer channel system and/or the inner channel system. The fluid is then transferred to a heat pump 671 which is further comprised within the moulding system 700 where its temperature is increased and from which it is reintroduced via the flow direction or pipe 673 into the outer channel system/inner channel system comprised in the moulds 723, 725 or placed within these moulds. The heat pump 671 may be advantageously be used for obtaining a high temperature for a blade post-cure process. The pump 667 may transfer the heated air or fluid from the mould to the storage tank 669. Thereby, a heat sink may be proposed which is capable of accumulation of excess reaction heat that could be used later in the curing process via the use of a thermodynamic heat pump.

According to embodiments of the present invention, a heat transferring system may comprise metal parts placed near the mould surface - in the vicinity of the blade spar cap area, for transferring the heat energy to other areas.

Furthermore, according to embodiments of the present invention, the heat transferring system may use stringers of copper or aluminium to move excess energy to areas spaced apart from excessive heat generating portions.

According to embodiments of the present invention, the heat transferring system may use tubes filled with a liquid, such as for example ethanol or other alcohol, that will evaporate at a defined temperature and may condensate in a colder part of the tube system, to where the heat energy is transferred.

According to embodiments of the present invention, the heat transferring system may use principles known from a usual household refrigerator.

According to embodiments of the present invention, the heat transferring system may use tubes filled with water or oil for the removal of excess heat from the spar cap area and other areas having thick laminates.

According to embodiment of the present invention, the heat transferring system may be based on airflow or liquid flow inside the mandrels capable of moving heat energy away from the insulated areas of the blade and mould, such as internal web structures.

According to embodiments of the present invention, a vacuum bag system consisting of a standard vacuum bag closest to the laminate and a second vacuum bag provided with length-wise channels for transmission of surplus heat by air or liquid. In the middle of the mandrel, a return pipe may return the heated air through the blade root opening.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Moulding system (400, 500, 600, 700) for manufacturing a rotor blade (100) of a wind turbine, the system comprising:
at least one outer mould (423) having a outer mould body (427, 431) with a moulding surface (429, 433) complementary to an intended outer surface portion (101, 103) of the rotor blade;
an outer heat redistribution system (435, 437, 661) within the outer mould body (427, 431) for redistributing heat from a spar cap area (113, 115) of the blade towards a leading edge (105) and/or a trailing edge (107) of the blade (100), wherein the outer heat redistribution system comprises:
an outer channel system (439, 441, 443) arranged within the mould body adjacent to the moulding surface;
a coolant fluid inlet (447) for introducing coolant fluid (445) into the outer channel system; and
a coolant fluid outlet (448) for letting out the coolant fluid having exchanged heat energy with a portion of the moulding body,
wherein the outer channel system comprises:
a first channel section (439) running substantially in a longitudinal direction (428) of the mould,
wherein the coolant fluid inlet (445) allows introduction of the coolant fluid into the outer channel system via the first channel section (439),
wherein the first channel section (439) is located adjacent to where the spar cap area (113, 115) of the blade (100) is located during manufacturing the blade.

2. Moulding system according to the previous claim, wherein the coolant fluid inlet (445) is located at a longitudinal side of the mould where the root of the blade (100) is to be formed.

3. Moulding system according to one of the previous claims, wherein the coolant fluid outlet (448) is located at another longitudinal side of the outer mould where the tip of the blade (100) is to be formed.

4. Moulding system according to one of the previous claims, the outer channel system further comprising:
plural second channel sections (441) branching off from the first channel section (439) in two different, in particular opposite directions, toward the leading edge and trailing edge of the blade,
wherein the coolant fluid (445) is fed into the second channel sections via the first channel section.

5. Moulding system according to the previous claim, the outer channel system further comprising:
a third channel section (443) and in particular another third channel section (444), the third channel section running substantially in the longitudinal direction (428), wherein the coolant fluid is fed into the third channel sections via the second channel section.

6. Moulding system according to the previous claim,
wherein the coolant fluid (445) leaves the outer channel system via the third channel section (443, 444).

7. Moulding system according to one of the previous claims, wherein the outer heat redistribution system comprises:
plural heat conducting elongated elements (661), in particular comprising metal, having a portion (663) located adjacent to where the spar cap (613, 615) of the blade is to be located and another portion (665) spaced away, toward the leading or the trailing edge, from where the spar cap of the blade is to be located.

8. Moulding system according to the previous claim,
wherein the heat conducting elongated elements have their longitudinal direction substantially oriented perpendicular to a longitudinal direction (628) of the mould.

9. Moulding system according to one of the previous claims, further comprising:
at least one inner mould (551) having a inner mould body (552) with a deformable/flexible moulding surface to contact an inner surface portion of the rotor blade;
an inner heat redistribution system (549) within the inner mould body (552) for redistributing heat from a root area of the blade towards a tip area of the blade.

10. Moulding system according to the previous claim,
wherein the inner heat redistribution system is adapted as at least one inner channel system (553), each comprising:
a flexible bag having inner channels (555) to be placed adjacent to a web structure (517) of the blade, the web structure connecting, within the blade to be manufactured, a windward side surface spar cap (513) with a leeward side surface spar cap (515) of the blade,
wherein the inner channels are adapted to allow flow through of a cooling fluid,
wherein the inner channels are running substantially in a longitudinal direction (527) of the mould.

11. Moulding system according to the previous claim,
the inner channel system further comprising at least one flow back pipe (557) running in a longitudinal direction within the inner mould body for guiding the cooling fluid from the tip area to the root area.

12. Moulding system according to one of the previous claims, further comprising:
a pump (667) adapted and connected for pumping the fluid such that it is introduced into and/or leaves the outer channel system and/or the inner channel system;
a fluid tank (669) for accommodating fluid which has left the outer channel system and/or the inner channel system;
a heat pump (671) adapted for increasing a temperature of the fluid obtained from the fluid tank and connected such that the fluid having increased temperature can be fed via the fluid inlet into the outer channel system and/or the inner channel system.

13. Moulding system according to one of the previous claims, wherein the outer heat redistribution system and/or the inner heat redistribution system is adapted to maintain a temperature of the spar cap area between 80°C and 130°C, in particular between 80°C and 100°C.

## Patentansprüche

1. Formsystem (400, 500, 600, 700) zum Herstellen eines Rotorblatts (100) einer Windkraftanlage, wobei das System Folgendes umfasst:
mindestens ein äußeres Formwerkzeug (423), das einen äußeren Formwerkzeugkörper (427, 431) mit einer Formoberfläche (429, 433) aufweist, die komplementär zu einem beabsichtigten äußeren Oberflächenabschnitt (101, 103) des Rotorblatts ist,
ein äußeres Wärmeumverteilungssystem (435, 437, 661) innerhalb des äußeren Formwerkzeugkörpers (427, 431) zum Umverteilen von Wärme von einem Gurtbereich (113, 115) des Blatts zu einer Anströmkante (105) und/oder einer Abströmkante (107) des Blatts (100), wobei das äußere Wärmeumverteilungssystem Folgendes umfasst:
ein äußeres Kanalsystem (439, 441, 443), das innerhalb des Formwerkzeugkörpers angrenzend an die Formoberfläche angeordnet ist,
einen Kühlfluideinlass (447) zum Einführen von Kühlfluid (445) in das äußere Kanalsystem und
einen Kühlfluidauslass (448) zum Auslassen des Kühlfluids, das Wärmeenergie mit einem Abschnitt des Formwerkzeugkörpers ausgetauscht hat,
wobei das äußere Kanalsystem Folgendes umfasst:
einen ersten Kanalteilabschnitt (439), der im Wesentlichen in einer Längsrichtung (428) des Formwerkzeugs verläuft,
wobei der Kühlfluideinlass (445) die Einführung des Kühlfluids in das äußere Kanalsystem über den ersten Kanalteilabschnitt (439) ermöglicht,
wobei sich der erste Kanalteilabschnitt (439) angrenzend an die Stelle befindet, wo sich der Gurtbereich (113, 115) des Blatts (100) während der Herstellung des Blatts befindet.

2. Formsystem nach dem vorhergehenden Anspruch, wobei sich der Kühlfluideinlass (445) an einer Längsseite des Formwerkzeugs befindet, wo die Wurzel des Blatts (100) gebildet werden soll.

3. Formsystem nach einem der vorhergehenden Ansprüche, wobei sich der Kühlfluidauslass (448) an einer anderen Längsseite des äußeren Formwerkzeugs befindet, wo die Spitze des Blatts (100) gebildet werden soll.

4. Formsystem nach einem der vorhergehenden Ansprüche, wobei das äußere Kanalsystem ferner Folgendes umfasst:
mehrere zweite Kanalteilabschnitte (441), die von dem ersten Kanalteilabschnitt (439) in zwei verschiedene, insbesondere in entgegengesetzte Richtungen hin zu der Anströmkante und der Abströmkante des Blatts abzweigen,
wobei das Kühlfluid (445) über den ersten Kanalteilabschnitt in die zweiten Kanalteilabschnitte eingespeist wird.

5. Formsystem nach einem der vorhergehenden Ansprüche, wobei das äußere Kanalsystem ferner Folgendes umfasst:
einen dritten Kanalteilabschnitt (443) und insbesondere einen weiteren dritten Kanalteilabschnitt (444), wobei der dritte Kanalteilabschnitt im Wesentlichen in der Längsrichtung (428) verläuft, wobei das Kühlfluid über den zweiten Kanalteilabschnitt in die dritten Kanalteilabschnitte eingespeist wird.

6. Formsystem nach einem der vorhergehenden Ansprüche, wobei das Kühlfluid (445) das äußere Kanalsystem über den dritten Kanalteilabschnitt (443, 444) verlässt.

7. Formsystem nach einem der vorhergehenden Ansprüche, wobei das äußere Wärmeumverteilungssystem Folgendes umfasst:
mehrere wärmeleitende längliche Elemente (661) insbesondere Metall umfassend, die einen Abschnitt (663) aufweisen, der sich angrenzend an die Stelle befindet, an der sich der Gurt (613, 615) des Blatts befinden soll, und einen weiteren Abschnitt (665), der hin zur Anström- oder zur Abströmkante von der Stelle beabstandet ist, an der sich der Gurt des Blatts befinden soll.

8. Formsystem nach einem der vorhergehenden Ansprüche, wobei bei den wärmeleitenden länglichen Elementen deren Längsrichtung im Wesentlichen senkrecht zu einer Längsrichtung (628) des Formwerkzeugs ausgerichtet ist.

9. Formsystem nach einem der vorhergehenden Ansprüche, ferner Folgendes umfassend:
mindestens ein inneres Formwerkzeug (551), das einen inneren Formwerkzeugkörper (552) mit einer verformbaren/flexiblen Formoberfläche für den Kontakt mit einem inneren Oberflächenabschnitt des Rotorblatts aufweist,
ein inneres Wärmeumverteilungssystem (549) innerhalb des inneren Formwerkzeugkörpers (552) zum Umverteilen von Wärme von einem Wurzelbereich des Blatts hin zu einem Spitzenbereich des Blatts.

10. Formsystem nach dem vorhergehenden Anspruch, wobei das innere Wärmeumverteilungssystem als mindestens ein inneres Kanalsystem (553) eingerichtet ist, das jeweils Folgendes umfasst:
einen flexiblen Beutel, der innere Kanäle (555) aufweist, die angrenzend an eine Stegstruktur (517) des Blatts zu platzieren sind, wobei die Stegstruktur innerhalb des herzustellenden Blatts einen luvwärtigen Seitenoberflächengurt (513) mit einem leewärtigen Seitenoberflächengurt (515) des Blatts verbindet,
wobei die inneren Kanäle dafür eingerichtet sind, einen Durchfluss eines Kühlfluids zu gestatten,
wobei die inneren Kanäle im Wesentlichen in eine Längsrichtung (527) des Formwerkzeugs verlaufen.

11. Formsystem nach dem vorhergehenden Anspruch,
wobei das innere Kanalsystem ferner mindestens ein Rückflussrohr (557) umfasst, das innerhalb des inneren Formwerkzeugkörpers in eine Längsrichtung verläuft, zum Führen von Kühlfluid von dem Spitzenbereich zu dem Wurzelbereich.

12. Formsystem nach einem der vorhergehenden Ansprüche, ferner Folgendes umfassend:
eine Pumpe (667), die zum Pumpen des Fluids derart eingerichtet und angeschlossen ist, dass es in das äußere Kanalsystem und/oder das innere Kanalsystem eingeführt wird und/oder dieses verlässt,
einen Fluidtank (669) zum Aufbewahren von Fluid, welches das äußere Kanalsystem und/oder das innere Kanalsystem verlassen hat,
eine Wärmepumpe (671), die zum Erhöhen einer Temperatur des aus dem Fluidtank bezogenen Fluids eingerichtet und derart angeschlossen ist, dass das Fluid, das eine erhöhte Temperatur aufweist, über den Fluideinlass in das äußere Kanalsystem und/oder das innere Kanalsystem eingespeist werden kann.

13. Formsystem nach einem der vorhergehenden Ansprüche, wobei das äußere Wärmeumverteilungssystem und/oder das innere Wärmeumverteilungssystem dafür eingerichtet ist, eine Temperatur des Gurtbereichs zwischen 80 °C und 130 °C, insbesondere zwischen 80 °C und 100 °C, zu halten.

## Revendications

1. Système de moulage (400, 500, 600, 700) permettant de fabriquer une pale de rotor (100) d'une éolienne, le système comprenant :
au moins un moule extérieur (423) présentant un corps de moule extérieur (427, 431) muni d'une surface de moulage (429, 433) complémentaire d'une partie surface extérieure (101, 103) prévue de la pale de rotor ;
un système de redistribution de chaleur extérieur (435, 437, 661) situé au sein du corps de moule extérieur (427, 431) et permettant de redistribuer de la chaleur à partir d'une zone de semelle de longeron (113, 115) de la pale en direction d'un bord d'attaque (105) et/ou d'un bord de fuite (107) de la pale (100), dans lequel le système de redistribution de chaleur extérieur comprend :
un système de canal extérieur (439, 441, 443) agencé au sein du corps de moule à proximité adjacente de la surface de moulage ;
une entrée de fluide réfrigérant (447) permettant d'introduire du fluide réfrigérant (445) dans le système de canal extérieur ; et
une sortie de fluide réfrigérant (448) permettant de laisser sortir le fluide réfrigérant ayant échangé de l'énergie thermique avec une partie du corps de moulage,
dans lequel le système de canal extérieur comprend :
une première section de canal (439) s'étendant essentiellement dans une direction longitudinale (428) du moule,
dans lequel l'entrée de fluide réfrigérant (445) permet une introduction du fluide réfrigérant dans le système de canal extérieur via la première section de canal (439),
dans lequel la première section de canal (439) est située à proximité adjacente de l'endroit où la zone de semelle de longeron (113, 115) de la pale (100) est située pendant la fabrication de la pale.

2. Système de moulage selon la revendication précédente, dans lequel l'entrée de fluide réfrigérant (445) est située au niveau d'un côté longitudinal du moule à l'endroit où l'emplanture de la pale (100) doit être formée.

3. Système de moulage selon l'une quelconque des revendications précédentes, dans lequel la sortie de fluide réfrigérant (448) est située au niveau d'un autre côté longitudinal du moule extérieur à l'endroit où la pointe de la pale (100) doit être formée.

4. Système de moulage selon l'une quelconque des revendications précédentes, le système de canal extérieur comprenant en outre :
plusieurs deuxièmes sections de canal (441) formant un embranchement à partir de la première section de canal (439) dans deux directions différentes, en particulier opposées, vers le bord d'attaque et le bord de fuite de la pale,
dans lequel le fluide réfrigérant (445) est alimenté dans les deuxièmes sections de canal via la première section de canal.

5. Système de moulage selon la revendication précédente, le système de canal extérieur comprenant en outre :
une troisième section de canal (443) et en particulier une autre troisième section de canal (444), la troisième section de canal s'étendant essentiellement dans la direction longitudinale (428),
dans lequel le fluide réfrigérant est alimenté dans les troisièmes sections de canal via la deuxième section de canal.

6. Système de moulage selon la revendication précédente,
dans lequel le fluide réfrigérant (445) quitte le système de canal extérieur via la troisième section de canal (443, 444) .

7. Système de moulage selon l'une quelconque des revendications précédentes,
dans lequel le système de redistribution de chaleur extérieur comprend :
plusieurs éléments allongés thermo-conducteurs (661), en particulier constitués de métal, présentant une partie (663) située à proximité adjacente de l'endroit où la semelle de longeron (613, 615) de la pale doit être située et une autre partie (665) située à distance, en direction du bord d'attaque ou du bord de fuite, de l'endroit où la semelle de longeron de la pale doit être située.

8. Système de moulage selon la revendication précédente,
dans lequel la direction longitudinale des éléments allongés thermo-conducteurs est essentiellement orientée de manière perpendiculaire à une direction longitudinale (628) du moule.

9. Système de moulage selon l'une quelconque des revendications précédentes, comprenant en outre :
au moins un moule intérieur (551) présentant un corps de moule intérieur (552) muni d'une surface de moulage déformable/flexible afin de venir en contact avec une partie surface intérieure de la pale de rotor ;
un système de redistribution de chaleur intérieur (549) situé au sein du corps de moule intérieur (552) et permettant de redistribuer de la chaleur en provenance d'une zone d'emplanture de la pale vers une zone de pointe de la pale.

10. Système de moulage selon la revendication précédente,
dans lequel le système de redistribution de chaleur intérieur est conçu sous la forme d'au moins un système de canal intérieur (553), comprenant respectivement :
un sac flexible présentant des canaux intérieurs (555) destiné à être placé à proximité adjacente d'une structure d'âme (517) de la pale, la structure d'âme raccordant, au sein de la pale à fabriquer, une semelle de longeron de surface latérale au vent (513) avec une semelle de longeron de surface latérale sous le vent (515) de la pale,
dans lequel les canaux intérieurs sont conçus pour permettre une circulation traversante d'un fluide réfrigérant,
dans lequel les canaux intérieurs s'étendent essentiellement dans une direction longitudinale (527) du moule.

11. Système de moulage selon la revendication précédente,
le système de canal intérieur comprenant en outre au moins une conduite de retour (557) s'étendant dans une direction longitudinale au sein du corps de moule intérieur afin de guider le fluide réfrigérant de la zone de pointe vers la zone d'emplanture.

12. Système de moulage selon l'une quelconque des revendications précédentes, comprenant en outre :
une pompe (667) conçue et raccordée afin de pomper le fluide de sorte qu'il est introduit dans, et/ou quitte, le système de canal extérieur et/ou le système de canal intérieur ;
un réservoir de fluide (669) permettant d'accueillir du fluide qui a quitté le système de canal extérieur et/ou le système de canal intérieur ;
une pompe à chaleur (671) conçue pour augmenter une température du fluide obtenu auprès du réservoir de fluide et raccordée de telle manière que le fluide présentant une température augmentée peut être alimenté via l'entrée de fluide jusque dans le système de canal extérieur et/ou le système de canal intérieur.

13. Système de moulage selon l'une quelconque des revendications précédentes,
dans lequel le système de redistribution de chaleur extérieur et/ou le système de redistribution de chaleur intérieur est conçu pour maintenir une température de la zone de semelle de longeron entre 80°C et 130°C, en particulier entre 80°C et 100°C.
